(19) Europäisches Patentamt
European Patent Office
Office européen des brevets

(11) **EP 2 589 632 A1**

(12) **EUROPEAN PATENT APPLICATION**
published in accordance with Art. 153(4) EPC

(43) Date of publication:
08.05.2013 Bulletin 2013/19

(51) Int Cl.:
*C09J 7/02* (2006.01)     *B60B 7/00* (2006.01)
*C09J 133/04* (2006.01)

(21) Application number: 11800373.0

(22) Date of filing: 16.06.2011

(86) International application number:
PCT/JP2011/003434

(87) International publication number:
WO 2012/001899 (05.01.2012 Gazette 2012/01)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 29.06.2010 JP 2010148242

(71) Applicant: Nitto Denko Corporation
Ibaraki-shi
Osaka 567-8680 (JP)

(72) Inventors:
• HANAKI, Ikkou
Ibaraki-shi
Osaka 567-8680 (JP)
• KATO, Naoto
Ibaraki-shi
Osaka 567-8680 (JP)
• KOIZUMI, Takashi
Ibaraki-shi
Osaka 567-8680 (JP)
• TAMAI, Hironori
Ibaraki-shi
Osaka 567-8680 (JP)

(74) Representative: Grünecker, Kinkeldey,
Stockmair & Schwanhäusser
Leopoldstrasse 4
80802 München (DE)

(54) **WHEEL-PROTECTING FILM**

(57)    A wheel protective film (30) is provided with a base layer and a pressure sensitive adhesive which is disposed one surfaces of the base layer. The diameter (L3) of the wheel protecting film is smaller than the diameter (L1) of the wheel that is to be protected and greater than the outermost diameter (L2) of the opening that is formed in the disc surface of the wheel that is to be protected. The diameter of the wheel -protecting film can be 80% or more of the diameter of the wheel that is to be protected.

FIG.3

## Description

Technical Field

The present invention relates to a protective film to be attached to wheels of vehicles, such as automobiles.

Background Art

Until now, there have been sometimes the cases where, in automotive wheels, such as aluminum wheels, dew condensation is generated in the wheels during transportation of automobiles, for example, during transportation by ship, due to a change in the temperature in the ship, etc. As a result, there has been the problem that rust is caused in a disc brake arranged inside an automotive wheel, etc. Accordingly, a protective film is attached to the surface of an automotive wheel in order to prevent such occurrence of rust.

As such a protective film, a wheel protective film to be used by being attached to a tire wheel is devised, in which: the wheel protective film has a base film and a pressure-sensitive adhesive layer provided on the base film; the diameter of the wheel protective film is larger than that of a wheel; and the wheel protective film is used by being attached to a tire as well (see Patent Document 1).

Patent Document

[Patent Document 1] Japanese Patent Application Publication No. 2009-227746

Disclosure of the Invention

Problem to be Solved by the Invention

In the aforementioned wheel protective film, however, part of it is attached to the surface of a tire, and hence a plasticizer contained in the tire moves to the pressure-sensitive adhesive layer in the protective film, thereby possibly causing the fear that the performance of pressure-sensitive adhesive may be deteriorated. The protective film is likely to peel off from that part when the performance of the pressure-sensitive adhesive is deteriorated, and hence there is the fear that the protective film may peel off even from the surface of the wheel due to wind blowing, for example, while a vehicle is being transported by a carrier car, etc.

The present invention has been made in view of these situations, and a purpose of the invention is to provide a wheel protective film by which a stable state of being attached to a wheel of a vehicle, etc., can be achieved.

Means for Solving the Problem

In order to solve the aforementioned problem, a wheel protective film according to an embodiment of the present invention is one including a base layer and a pressure-sensitive adhesive layer provided on one of the surfaces of the base layer, in which the diameter of the wheel protective film is smaller than that of a wheel to be protected and larger than the outermost diameter of an opening formed on the disc surface of the wheel to be protected.

According to the embodiment, the protective film is attached to a wheel, not to the surface of a tire, and hence a decrease in the performance of pressure-sensitive adhesive, occurring due to, for example, a plasticizer, etc., contained in the tire, is not caused.

The diameter of the wheel protective film may be 80% or more of the diameter of the wheel to be protected.

When it is assumed that: the diameter of the wheel to be protected is L1; the diameter of the opening is L2; and the diameter of the wheel protective film is L3, $L3 \geq L2+(L1-L2) \times 0.5$ may be satisfied.

A circular opening is formed at the center of the wheel protective film, and the opening may be formed such that a plurality of bolt holes formed in the wheel are exposed. Advantage of the Invention

According to the present invention, a vehicle wheel protective film can be provided, in which a stable state of being attached to a vehicle wheel can be achieved.

BRIEF DESCRIPTION OF THE DRAWINGS

Fig. 1 is a front view illustrating an example of an automotive wheel;
Figs. 2(a) is a front view of a protective film according to First Embodiment;

Fig. 2(b) is a sectional view of the protective film illustrated in Fig. 2(a), taken along A-A Line;

Fig. 3 is a front view illustrating a state where the protective film according to First Embodiment is attached to a wheel; and

Fig. 4 is a front view illustrating a state where a protective film according to Second Embodiment is attached to a wheel.

[BEST MODE FOR CARRYING OUT THE INVENTION

Hereinafter, best modes for carrying out the present invention will be described in detail, with reference to the accompanying drawings and tables. In the following each embodiment, an automotive wheel is taken as an example to which a protective film is applied; however, application of the protective film is not limited to such a wheel.

A wheel protective film according to the present embodiment (hereinafter, referred to as a "protective film") can prevent that a scratch may be created on or a stain may be adhered to the surface of a wheel before an automobile is delivered, and further prevent that rust may be caused in a disc brake arranged inside a wheel, while an automobile is being transported by ship for a long period of time for export of the automobile, etc. Also, when an automobile is delivered after being stored for a long period of time since protective films were attached to wheels, and when the protective films are intended to be swiftly peeled off from the wheels, the protective film according to the embodiment can be easily peeled off and can prevent occurrence of adhesive deposit, possibly occurring when the protective film is peeled off.

[First Embodiment]

(Automotive Wheel)

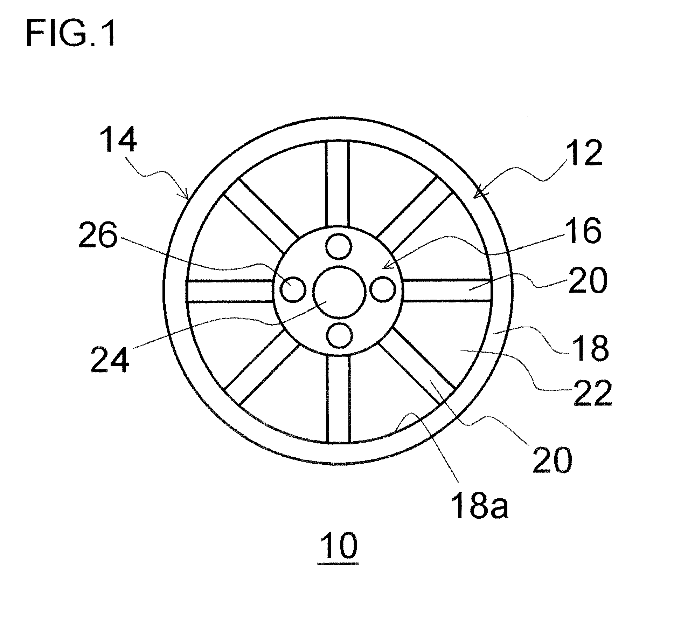

Fig. 1 is a front view illustrating an example of an automotive wheel. As illustrated in the view, an automotive wheel (hereinafter, referred to as a "wheel") 10 is an article made of an aluminum alloy, which is formed by casting (or forging); and is composed mainly of a disc-shaped disc portion 12 and an annular rim portion 14 extending to the axial inside of the disc portion 12. In the wheel 10, a hub and a disc brake of an automobile are arranged in the space enclosed by the disc portion 12 and the rim portion 14. A tire (not illustrated) is mounted on the outer circumference of the rim portion 14, thereby allowing an automotive wheel to be formed by the tire and the wheel 10.

The disc portion 12 in the wheel 10 includes: a hub portion 16 that forms the center portion of the disc portion 12; an annular rim flange portion 18 that forms the outer periphery portion; and a plurality of spoke portions 20 each connecting the hub portion 16 and the rim flange portion 18. Each of the spoke portions 20 extends linearly (in a radial pattern) from the outer circumference of hub portion 16 toward the radial outside, and the radially outside end reaches a rim inner circumferential surface 18a of the rim flange portion 18 to be connected integrally therewith. An opening 22 communicating the inside and the outside of the wheel 10 is formed between the spokes 20 adjacent to each other.

A hub hole 24 through which a hub axial end of the hub is to be inserted is formed at the center of the hub portion 16. A plurality of (four) insertion holes 26 are formed around the hub hole 24, through each of which a hub bolt (not illustrated) extending axially outside from the hub and a hub nut (not illustrated) to be firmly fastened to the hub bolt are to be inserted.

(Protective Film)

When an automobile is transported by ship for a long period of time for the export of the automobile, etc., as stated above, a protective film 30 according to the present embodiment is attached to the front side (outside) of the disc portion 12 in the wheel 10 of a wheel of the automobile, so that a plurality of the openings 22 formed in the disc portion 12 are temporarily blocked, thereby suppressing occurrence of rust in a rotor (not illustrated) in a disc brake arranged inside the wheel 10.

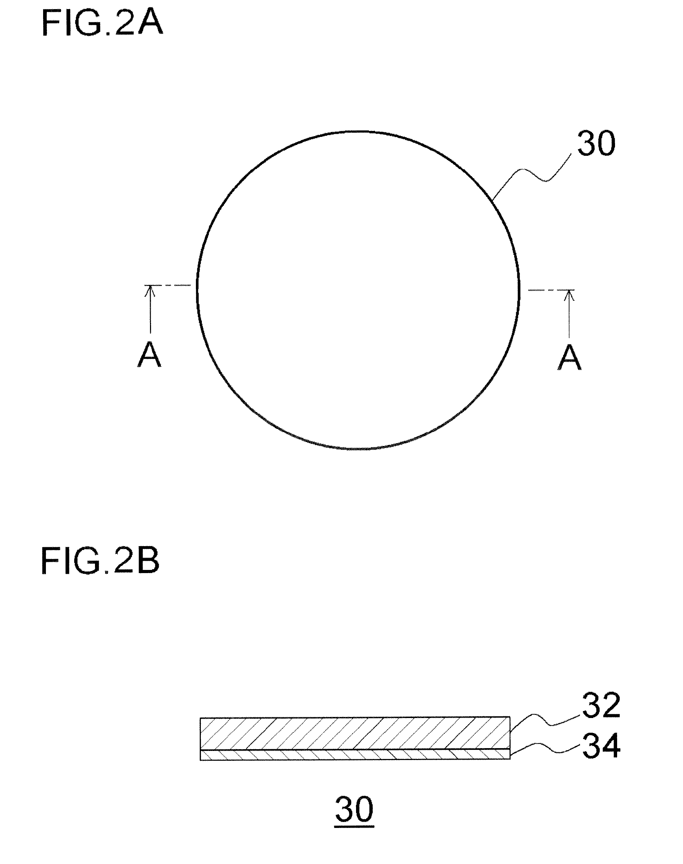

Fig. 2(a) is a front view of a protective film according to First Embodiment, and Fig. 2 (b) is a sectional view of the protective film illustrated in Fig. 2(a), taken along A-A Line. As illustrated in Fig. 2(a), the protective film 30 according to the present embodiment has a disc shape. Also, as illustrated in Fig. 2(b), the protective film 30 includes a base layer 32 and a pressure-sensitive adhesive layer 34 provided on one of the surfaces of the base layer 32.

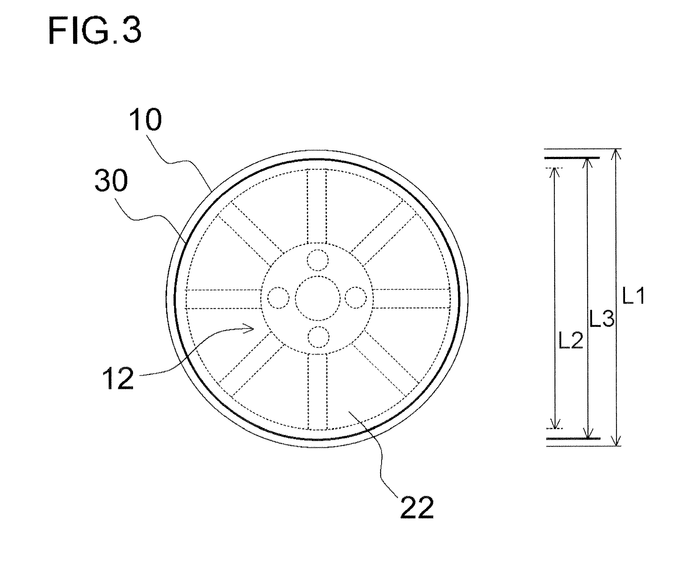

Fig. 3 is a front view illustrating a state where the protective film according to First Embodiment is attached to a wheel. As illustrated in Fig. 3, the diameter L3 of the protective film according to the embodiment is smaller than the diameter L1 of the wheel 10 to be protected, and larger than the outermost diameter L2 of the opening 22 formed in the disc portion 12 in the wheel to be protected. Accordingly, the protective film 30 is attached to the wheel 10, not to the surface of a tire, and hence a decrease in the performance of pressure-sensitive adhesive, occurring due to, for example, a plasticizer, etc., contained in a tire, is not caused.

It is preferable that the diameter of the protective film 30 is 80% or more of the diameter L1 of the wheel 10 to be protected. Thereby, it becomes possible to cover most of the disc portion 12 in the wheel 10.

When it is assumed that: the diameter of the wheel to be protected is L1; the outer diameter of the opening is L2; and the diameter of the wheel protective film is L3, it is preferable to satisfy L3 ≥ L2+(L1-L2) x 0.5. Thereby, the protective film 30 has a sufficient attached area in the annular rim flange portion 18 between the outer circumference of the wheel 10 and the opening 22.

The protective film 30 according to the present embodiment is a wheel protective film including a base layer and a pressure-sensitive adhesive layer. Although not particularly limited, but it is preferable that: the trouser tear strength in the vertical direction (MD) of the protective film is 3 N or more; and the pressure-sensitive adhesive force of the protective film (adherend: an acrylic clear-coated panel, after a lapse of 48 hours under the condition of 23°C x 50% RH) is 4.9 N/25 mm or more when tension speed is 0.3 m/min. , and is 19.6 N/25 mm or less when tension speed is 30 m/min.

The trouser tear strength (hereinafter, also and simply referred to as "tear strength") in the vertical direction (MD) of the protective film 30 according to the present embodiment is 3 N or more, preferably 4 N or more, and more preferably 8 N or more, when measured by the later-described measurement method. In addition to the aforementioned tear strength, the pressure-sensitive adhesive force of the protective film (adherend: an acrylic clear-coated panel, after a lapse of 48 hours under the condition of 23°C x 50% RH), when measured by the later-described measurement method, is 4.9 N/25 mm or more, and preferably 5.5 N/25 mm or more (maximum value is 20 N/25 mm or less) when tension speed is 0.3 N/min; and is 19. 6 N/25 mm or less, preferably 15 N/25 mm or less, and more preferably 12 N/25 mm or less (minimum value is 5 N/25 mm or more) when tension speed is 30 m/min. With both the tear strength and the pressure-sensitive adhesive force satisfying the aforementioned numeric value range, good peeling workability can be maintained and a cut or tear in the protective film can be prevented, even when the protective film is peeled off from a wheel at high speed (10 m/min or 30 m/min) .

(Pressure-Sensitive Adhesive Layer)

The acrylic pressure-sensitive adhesive layer to be used in the protective film 30 according to the present embodiment is not particularly limited, but it is preferable that the acrylic pressure-sensitive adhesive layer is made of a pressure-sensitive adhesive composition containing, for example, a (meth)acrylic polymer and a cross-linking agent, and it is more preferable that the aforementioned (meth)acrylic polymer contains, as a major component, a (meth) acrylic monomer having a $C_{1-14}$ alkyl group. The (meth)acrylic monomer that forms, as a major component, the aforementioned (meth) acrylic polymer is not particularly limited, as far as it is the aforementioned (meth)acrylic monomer having a $C_{1-14}$ alkyl group. The number of the carbon atoms is preferably within a range of 1 to 12, and more preferably within a range of 2 to 10. By using a (meth) acrylic monomer whose number of carbon atoms is within the aforementioned range, the initial adhesiveness and the adhesiveness in a low-temperature environment, such as in winter, can be secured, which is suitable for an application in which automotive wheels are protected. It is particularly preferable to contain a (meth) acrylic monomer having a $C_{1-4}$ alkyl group as a major component. The aforementioned (meth)acrylic monomer having a $C_{1-4}$ alkyl group is contained preferably in an amount within a range of 40 to 80% by weight, and more preferable in an amount within a range of 50 to 75% by weight, based on the total weight of the (meth)acrylic monomer having a $C_{1-14}$ alkyl group. By using the aforementioned (meth) acrylic monomer having a $C_{1-4}$ alkyl group in an amount within the aforementioned range, the protective film becomes effective, because the cohesive force of the pressure-sensitive adhesive is improved and adhesive deposit, possibly occurring when the protective film is peeled off after use, can be prevented.

Examples of the aforementioned (meth) acrylic monomer having a $C_{1-14}$ alkyl group include, for example: methyl(meth)acrylate, ethyl(meth)acrylate, propyl(meth)acrylate, n-butyl(meth)acrylate, isobutyl(meth)acrylate, sec-butyl(meth)acrylate, t-butyl(meth)acrylate, hexyl(meth)acrylate, cyclohexyl(meth)acrylate, t-butyl cyclohexyl(meth)acrylate, 2-ethylhexyl methacrylate, isoamyl(meth)acrylate, n-pentyl(meth)acrylate, isopentyl(meth)acrylate, cyclopentyl (meth)acrylate, n-octyl(meth)acrylate, isooctyl(meth)acrylate, cyclooctyl(meth)acrylate, n-nonyl(meth)acrylate, isononyl (meth)acrylate, n-decyl(meth)acrylate, isodecyl(meth)acrylate, n-dodecyl(meth)acrylate, isomyristyl(meth)acrylate, n-tridecyl(meth)acrylate, n-tetradecyl(meth)acrylate, etc. Among them, ethyl(meth)acrylate, n-butyl(meth)acrylate, isobutyl (meth)acrylate, sec-butyl(meth)acrylate, t-butyl(meth)acrylate, etc., are preferably used.

In the present embodiment, the aforementioned (meth) acrylic monomer having a $C_{1-14}$ alkyl group may be used alone or in combination of two or more thereof. The content of the aforementioned (meth)acrylic monomer having a $C_{1-14}$ alkyl group is preferably within a range of 40 to 90% by weight, and more preferably within a range of 50 to 80% by weight, based on the weight of the whole monomers. If the content is more than 90% by weight, the cohesive force of the pressure-sensitive adhesive is sometimes remarkably decreased, or if the content is less than 40% by weight, a decrease in the initial adhesiveness may be caused, which is not preferred.

The aforementioned (meth) acrylic polymer may contain another monomer component within a range not impairing the performance of the wheel protective film, other than the aforementioned (meth) acrylic monomer having a $C_{1-14}$ alkyl group. For example, a hydroxyl group-containing monomer can be used. By using the aforementioned hydroxyl group-containing monomer, the protective film becomes effective because the cross-linking property with a cross-linking agent is increased and adhesive deposit can be prevented. Examples of the aforementioned hydroxyl group-containing monomer include, for example, 2-hydroxyethyl(meth)acrylate, 2-hydroxypropyl(meth)acrylate, 4-hydroxy butyl(meth)acrylate, 2-hydroxyhexyl(meth)acrylate, 6-hydroxyhexyl(meth)acrylate, 8-hydroxy octyl(meth)acrylate, 10-hydroxydecyl(meth)acrylate, 12-hydroxylauryl(meth)acrylate, (4-hydroxymethylcyclohexyl)methyl acrylate, N-methylol(meth)acrylamide, N-hydroxy(meth)acrylamide, vinyl alcohol, allyl alcohol, 2-hydroxyethyl vinyl ether, 4-hydroxybutyl vinyl ether, and diethylene glycol monovinyl ether, etc. Among them, 2-hydroxyethyl(meth)acrylate and 2-hydroxyhexyl (meth)acrylate, etc., can be preferably used.

In the present embodiment, the aforementioned hydroxyl group-containing monomers may be used alone or in combination of two or more thereof. The content of the aforementioned hydroxyl group-containing monomer is preferably within a range of 1 to 30% by weight, more preferably within a range of 2 to 20% by weight, and particularly preferable within a range of 3 to 10% by weight, based on the weight of the whole monomers. If the content is more than 30% by weight, the initial adhesiveness is sometimes decreased, or if the content is less than 1% by weight, a decrease in the cohesive force of the pressure-sensitive adhesive is caused, which is not preferred.

Further, the aforementioned (meth) acrylic polymer may contain a vinyl monomer that can be polymerized with the aforementioned (meth)acrylate having a $C_{1-14}$ alkyl group and the hydroxyl group-containing monomer. For example, a component that improves cohesive force or heat resistance property, such as a sulfonic group-containing monomer, phosphate group-containing monomer, cyano group-containing monomer, vinyl ester monomer, and aromatic vinyl monomer; a component having a functional group that acts for improving adhesive force or as a basic point of cross-linking, such as a carboxyl group-containing monomer, acid anhydride group-containing monomer, amide group-containing monomer, amino group-containing monomer, imido group-containing monomer, epoxy group-containing monomer, and vinyl ether monomer; or a (meth) acrylic monomer having another alkyl group, can be appropriately used. These monomer compounds may be used alone or in combination of two or more thereof.

Examples of the aforementioned sulfonic group-containing monomer include, for example, styrene sulfonic acid, allyl sulfonic acid, 2-(meth)acrylamide-2-methylpropanesulfonic acid, (meth)acrylamide propanesulfonic acid, sulfopropyl(meth)acrylate, and (meth)acryloyloxynaphthalenesulfonic acid, etc.

An example of the aforementioned phosphate group-containing monomer includes, for example, 2-hydroxyethylacryloyl phosphate.

Examples of the aforementioned cyano group-containing monomer include, for example, acrylonitrile and methacrylonitrile, etc.

Examples of the aforementioned vinyl ester monomer include, for example, vinyl acetate, vinyl propionate, vinyl laurate, and vinyl pyrrolidone, etc.

Examples of the aforementioned aromatic vinyl monomer include, for example, styrene, chloro styrene, chloro methyl styrene, α-methylstyrene, and benzyl(meth)acrylate, etc.

Examples of the aforementioned carboxyl group-containing monomer include, for example, acrylic acid, methacrylic acid, carbaxyethyl(meth)acrylate, carboxypentyl(meth)acrylate, itaconic acid, maleic acid, fumaric acid, and crotonic acid, etc. Among them, acrylic acid and methacrylic acid are particularly preferred.

Examples of the aforementioned acid anhydride group-containing monomer include, for example, maleic anhydride, and itaconic anhydride, etc.

Examples of the aforementioned amide group-containing monomer include, for example, acrylamide, methacrylamide, diethyl (meth)acrylamide, N-vinyl pyrrolidone, N-vinyl-2-pyrrolidone, N-(meth) acryloylpyrrolidone, N,N-dimethylacrylamide, N,N-dimethylmethacrylamide, N,N-diethylacrylamide, N,N-diethylmethacrylamide, N,N'-methylenebisacrylamide, N,N-dimethylaminopropylacrylamzde, and N,N-dimethylaminopropyl methacrylamide etc.

Examples of the aforementioned amino group-containing monomer include, for example, N,N-dimethylaminoethyl(meth)acrylate, N,N-dimethylaminopropyl(meth)acrylate, N-(meth)acryloylmorpholine, and (meth)acrylic acid amino alkyl ester, etc.

Examples of the aforementioned imido group-containing monomer include, for example, cyclohexylmaleimide, isopropylmaleimide, N-cyclohexylmaleimide, and itaconimide, etc.

Examples of the aforementioned epoxy group-containing monomer include, for example, glycidyl(meth)acrylate and allyl glycidyl ether, etc.

Examples of the aforementioned vinyl ether monomer include, for example, methyl vinyl ether, ethyl vinyl ether, and isobutyl vinyl ether, etc.

In the present embodiment, vinyl monomers that can be polymerized may be used alone or in combination of two or more thereof. The content of the vinyl monomers as a whole is preferably within a range of 10 to 50% by weight, and more preferably within a range of 20 to 40% by weight, based on the weight of the whole monomer components of the (meth)acrylic polymer. If the content is more than 50% by weight, the initial adhesiveness is sometimes decreased, or if the content is less than 10% by weight, the cohesive force of the pressure-sensitive adhesive is sometimes decreased remarkably, which is not preferred.

In terms of easily balancing the pressure-sensitive adhesive performance, the glass transition temperature (Tg) of the aforementioned (meth) acrylic polymer is 0°C or lower (normally -100°C or higher), preferably -10°C or lower, and more preferably -20°C or lower. If the glass transition temperature is higher than 0°C, the polymer becomes resistant to flow and hence the wetting of an adherend is insufficient, thereby presenting the tendency that a blister may be caused between an automotive wheel and the pressure-sensitive adhesive layer of the protective film. The glass transition temperature (Tg) of the (meth) acrylic polymer can be adjusted so as to be within the aforementioned range by appropriately changing monomer components to be used or a composition ratio. A commonly-used value may be adopted as the glass transition temperature (Tg) (°C), and the numeric values, etc., described in, for example, Chapter VI, section 198-253 of Polymer Handbook Fourth Edition (by J. Brandup, et al., 1999, John Wiley & Sons, Inc), can be adopted. In the case of a new polymer, the peak temperature of a loss tangent (tan $\delta$) in a viscoelasticity measurement method (shearing method, measurement frequency: 1 Hz) may be adopted as the glass transition temperature (Tg).

As the method of manufacturing such the (meth) acrylic polymer, a publicly-known radical polymerization method, such as solution polymerization, bulk polymerization, emulsion polymerization, or the like, can be appropriately selected. The obtained (meth)acrylic polymer may be any one of a random copolymer, block copolymer, and graft copolymer, etc.

In the solution polymerization, a solvent selected from the group consisting of, for example, methyl ethyl ketone, acetone, ethyl acetate, tetrahydrofran, dioxane, cyclohexane, n-hexane, toluene, xylene, mesitylene, methanol, ethanol, n-propanol, isopropanol, water, and various aqueous solutions, can be adopted as the polymerization solvent. The reaction is carried out under the flow of an inert gas, such as nitrogen, and usually at approximately 60°C to 80°C for approximately 4 to 10 hours.

The polymerization initiator and the chain transfer agent, etc., to be used in the radical polymerization are not particularly limited, but the substances appropriately selected can be used.

Examples of the polymerization initiator to be used in the present embodiment include, for example: azo initiators, such as a 2,2'-azobisisobutyronitrile, 2,2'-azobis(2-amidinopropane)dihydrochloride, 2,2'-azobis[2-(5-methyl-2-imidazoline-2-yl)propane]dihydrochl oride, 2,2'-azobis(2-methylpropionamidine)disulfate, 2,2'-azobis(N,N'-dimethyleneisobutylamidine), 2,2'-azobis[N-(2-carboxyethyl)-2-methylpropionamidine]hydrate (made by Wako Pure Chemical Industries, Ltd., VA-057); peroxide initiators, such as persulfates including potassium persulfate and ammonium persulfate, etc., di (2-ethylhexyl)peroxidicarbonate, di(4-t-butylcyclohexyl)peroxidicarbonate, di-sec-butylperoxydicarbonate, t-butylperoxy neodecanoate, t-hexyl peroxypivalate, t-butyl peroxypivalate, dilauroyl peroxide, di-n-octanoyl peroxide, 1,1,3,3-tetramethylbutylperaxy-2-ethylhexanoate, di(4-methylbenzoyl)peroxide, dibenzoyl peroxide, t-butylperoxy isobutyrate, 1,1-di (t-hexylperoxy)cyclohexane, t-butyl hydroperoxide, and hydrogen peroxide; redox initiators in each of which a peroxide and a reducing agent are combined together, such as a combination of persulfate and sodium hydrogen sulfite and a combination of peroxide and sodium ascorbate; and the like. However, the polymerization initiator is not limited thereto.

The aforementioned polymerization initiators may be used alone or in combination of two or more thereof. The content thereof as a whole is preferably within a range of 0.005 to 1 part by weight, and more preferably within a range of 0.02 to 0.5 parts by weight, based on 100 parts by weight of the monomers.

In the polymerization according to the present embodiment, a chain transfer agent may also be used. The molecular weight of the acrylic polymer can be appropriately adjusted by using the chain transfer agent.

Examples of the chain transfer agent include, for example, lauryl mercaptan, glycidyl mercaptan, mercaptoacetic acid, 2-mercaptoethanol, thioglycolic acid, thioglycolic acid 2-ethylhexyl, and 2,3-dimercapto-1-propanol, etc.

These chain transfer agents may be used alone or in combination of two or more thereof. The content thereof as a whole is within a range of approximately 0.01 to 0.1 parts by weight based on 100 parts by weight of the monomers.

It is possible that the pressure-sensitive adhesive composition to be used in the present embodiment is made to be more excellent in weatherability and heat resistance, etc., by cross-linking the aforementioned (meth) acrylic polymer with a cross-linking agent, which is effective. As the cross-linking agent to be used in the present invention, a compound having, in its molecule, two or more functional groups that can react (can be bound) with the functional groups in the aforementioned functional group-containing (meth) acrylic monomers can be used. Examples of the compound include an isocyanate compound, epoxy compound, oxazoline compound, melamine resin, aziridine derivative, and metal chelate compound, etc.

Among them, examples of the isocyanate compound include: aromatic isocyanates, such as tolylene diisocyanate and xylene diisocyanate; alicyclic isocyanates, such as isophorone diisocyanate; aliphatic isocyanates, such as hexamethylene diisocyanate; and emulsified isocyanates, etc.

Examples of more specific isocyanate compounds include: low aliphatic polyisocyanates, such as butylene diisocyanate and hexamethylene diisocyanate; alicyclic isocyanates, such as cyclopentylene diisocyanate, cyclohexylene diisocyanate, and isophorone diisocyanate; aromatic diisocyanates, such as 2,4-tolylene diisocyanate, 4,4'-diphenylmethane diisocyanate, and xylylene diisocyanate; isocyanate adducts, such as trimethylolpropane/tolylene diisocyanate trimeric adduct (made by Nippon Polyurethane Industry Co., Ltd., Product Name: CORONATE L), trimethylolpropane/hexamethylene diisocyanate trimeric adduct (made by Nippon Polyurethane Industry Co., Ltd., Product Name:

CORONATE HL), and an isocyanurate compound of hexamethylene diisocyanate (made by Nippon Polyurethane Industry Co., Ltd., Product Name: CORONATE HX); self-emulsified polyisocyanate (made by Nippon Polyurethane Industry Co., Ltd. , Product Name: AQUANATE 200), etc. These isocyanate compounds may be used alone or in combination of two or more thereof.

Examples of the oxazoline compound include, for example, 2-oxazoline, 3-oxazoline, 4-oxazoline, 5-keto-3-oxazoline, and EPOCROS (made by Nippon Shokubai Co., Ltd.), etc. These compounds may be used alone or in combination.

Examples of the epoxy compound include, for example, polyglycidyl amine compounds, such as N,N,N',N'-tetraglycidyl-m-xylenediamine (Product Name: TETRAD-X, made by Mitsubishi Gas Chemical Company, Inc.), 1,3-bis (N,N-diglycidyl aminomethyl)cyclohexane (Product Name: TETRAD-C, made by Mitsubishi Gas Chemical Company, Inc.), tetraglycidyl diaminodiphenylmethane, triglycidyl-p-aminophenol, diglycidyl aniline, and diglycidyl-o-toluidine. These compounds may be used alone or in combination.

Examples of the melamine resin include hexamethylolmelamine and a water-soluble melamine resin, etc.

Example of the aziridine derivative include, for example, compounds with: a product name of HDU (made by Sogo Pharmaceutical Co, Ltd.); a product name of TAZM (made by Sogo Pharmaceutical Co, Ltd.); and a product name of TAZO (made by Sogo Pharmaceutical Co, Ltd.), which are commercially available, and the like. These compounds may be used alone or in combination.

Examples of the metallic component of the metal chelate compound include aluminum, iron, tin, titanium, and nickel, etc., and examples of the chelate component thereof include acethylene, methyl acetoacetate, and ethyl lactate, etc. These compounds may be used alone or in combination.

The content of these cross-linking agents is appropriately selected in terms of the balance with the (meth) acrylic polymer to be cross-linked and further as a wheel protective film. In order to acquire sufficient weatherability and heat resistance by the cohesive force of the (meth) acrylic polymer, the content is preferably within a range of 0.1 to 6 parts by weight, more preferably within a range of 0.2 to 4 parts by weight, and particularly preferably within a range of 0.4 to 2 parts by weight, based on 100 parts by weight of the aforementioned (meth) acrylic polymer. If the content of the cross-linking agent is less than 0.1 parts by weight, there is the tendency that the cross-link formation by the cross-linking agent becomes insufficient and hence the rate of solvent-insoluble matter may be decreased, and there is the tendency that the cohesive force of the pressure-sensitive adhesive layer becomes small and hence adhesive deposit may be caused. On the other hand, if the content thereof is more than 6 parts by weight, there is the tendency that: the initial adhesive force of the pressure-sensitive adhesive layer becomes insufficient, and the cohesive force of the polymer becomes large and the flow property is decreased, and hence the wetting of an adherend becomes insufficient, thereby possibly causing peeling.

In order to provide weatherability to the wheel protective film according to the present embodiment, a weathering stabilizer can be contained in the pressure-sensitive adhesive layer. The aforementioned weathering stabilizer means an ultraviolet ray absorbent, a light stabilizer, or an antioxidant, and these compounds may be used as a weathering stabilizer alone or in combination of two or more thereof. By using the aforementioned weathering stabilizer, peeling of the wheel protective film according to the embodiment and adhesive deposit can be prevented after being stored for a long period of time while the film is being attached to a wheel.

Examples of the aforementioned ultraviolet ray absorbent include, for example, a benzotriazol ultraviolet ray absorbent, triazine ultraviolet ray absorbent, benzophenone ultraviolet ray absorbent, salicylate ultraviolet ray absorbent, and cyanoacrylate ultraviolet ray absorbent, etc.

Specific examples of the aforementioned ultraviolet ray absorbent include, for example, 2-hydroxy-4-methoxybenzophenone, 2-hydroxy-4-n-octyloxy benzophenone, 2-(2'-hydroxy-5'-methylphenyl)benzotriazol, 2-(2'-hydroxy-3'-t-butyl-5'-methylphenyl)-5-chlorobenzotriazo le, 2-[2-hydroxy-3,5-bis($\alpha,\alpha$-dimethylbenzyl)phenyl]-2H-benzotria zol, 2,2'-methylenebis[4-(1,1,3,3-tetrabutyl)-6-(2H-benzotriazol)], 2-(4,6-diphenyl-1,3,5-triazine 2-yl)-5-[(hexyl)oxy]-phenol, 2,4-di-t-butylphenyl-3,5-di-t-butyl-4-hydroxybenzoate, 4-t-butylphenyl salicylate, and ethyl-2-cyano-3,3-diphenylacrylate, etc. These ultraviolet ray absorbents may be used alone or in combination of two or more thereof.

Among the above ultraviolet ray absorbents, it is preferable to use a benzotriazol ultraviolet ray absorbent. When the benzotriazol ultraviolet ray absorbent is used, weatherability can be further improved, and hence it can be further prevented that a decrease in the pressure-sensitive adhesive force, occurring due to bleeding of an ultraviolet ray absorbent, may be caused. As a result, even when the protective film is stored for a long period of time since the film was attached to a wheel, the pressure-sensitive adhesive force can be sufficiently maintained. Accordingly, it can be sufficiently prevented that the film may be peeled off from the wheel due to a decrease in the pressure-sensitive adhesive force, while an automobile is driving. Further, adhesive deposit, which may be caused after being stored for a long period of time, can be sufficiently prevented.

The content of the ultraviolet ray absorbent in the aforementioned pressure-sensitive adhesive layer is preferably within a range of 0.05 to 2 parts by weight, and more preferably within a range of 0.1 to 1.5 parts by weight, based on 100 parts by weight of the resin solids in the acrylic pressure-sensitive adhesive contained in the aforementioned pressure-sensitive adhesive layer. If the content is less than 0.05 parts by weight, there is the fear that the effect of improving weatherability may not be obtained. If the content is more than 2 parts by weight, there is the fear that the ultraviolet ray absorbent may bleed.

Conventionally and publicly known light stabilizers can be used as the aforementioned light stabilizer. For example, publicly-known light stabilizers, such as, for example, a hindered amine light stabilizer and a benzoate light stabilizer, can be appropriately used. Among them, when a hindered amine light stabilizer (HALS: Hinderd Amine Light Stabilizer) is particularly used, weatherability can be further improved, and hence it can be prevented that the pressure-sensitive adhesive force may be decreased due to the bleeding of the light stabilizer. As a result, even when the protective film is stored for a long period of time since the film was attached to a wheel, the pressure-sensitive adhesive force can be sufficiently maintained. Accordingly, it can be sufficiently prevented that the film may be peeled off from the wheel due to a decrease in the pressure-sensitive adhesive force, while an automobile is driving. Further, adhesive deposit, which may be caused after being stored for a long period of time, can be sufficiently prevented.

Examples of the aforementioned hindered amine light stabilizer include, for example, bis-(2,2,6,6-tetramethyl-4-piperidyl)sebacate, [dimethyl succinate-1-(2-hydroxyethyl)-4-hydroxy-2,2,6,6-tetramethylpip eridine]condensate, 1,2,2,6,6-pentamethyl-4-piperidyl-tridecyl-1,2,3,4-butanetetr acarboxylate, 1,2,2,6,6-pentamethyl-4-piperidinol, and an ester of 3,9-bis(2-hydroxy-1,1-dimethylethyl)-2,4,8,10-tetraspiro[5,5] undecane and a butanetetracarboxylic acid, etc. These light stabilizers may be used alone or in combination of two or more thereof.

Specific examples of the aforementioned hindered amine light stabilizer include, for example: reaction types, such as ADK STAB LA-82 and LA-87 made by ADEKA CORPORATION; monomer types, such as HOSTAVIN N-20 made by Hoechst Japan Co., Ltd., Tomisoap 77 made by Yoshitomi Fine Chemicals, Ltd., and Sanol LS-770 made by SANKYO LIFETECH CO., LTD.; and oligomer types, such as Uvinal 5050H made by BASF Japan Ltd.

The content of the aforementioned light stabilizer in the aforementioned pressure-sensitive adhesive layer is preferably within a range of 0.05 to 2 parts by weight, and more preferably within a range of 0.05 to 1.5 parts by weight, based on 100 parts by weight of the resin solids in the acrylic pressure-sensitive adhesive contained in the pressure-sensitive adhesive layer. If the content is less than 0.05 parts by weight, there is the fear that the effect of improving weatherability may not be obtained. If the content is more than 2 parts by weight, there is the fear that the light stabilizer may bleed.

Publicly-known antioxidants, for example, such as a hindered phenolic antioxidant, phosphorus processing heat stabilizer, lactone processing heat stabilizer, and sulfur heat resistance stabilizer, can be appropriately used as the antioxidant. These antioxidants may be used alone or in combination of two or more thereof.

The addition amount of the aforementioned antioxidant is preferably 3 parts by weight or less, more preferably 1 part by weight or less, and still more preferably within a range of approximately 0.01 to 0.5 parts by weight, based on 100 parts by weight of base polymer in each of the resin layer.

Alternatively, a tackifier may be added to the aforementioned pressure-sensitive adhesive composition. The tackifier is not particularly limited, but tackifiers conventionally-used in pressure-sensitive adhesives can be used. Examples of the tackifier include, for example: denatured rosin resins, such as a xylene resin, rosin and polymerized rosin, hydrogenated rosin, and rosin ester; terpene resins, such as a terpene resin, terpene phenol resin, rosin phenol resin; aliphatic, aromatic, and alicyclic petroleum resins; cumarone resins; styrene resins; and alkylphenol resins, etc. Among them, a rosin resin, aromatic petroleum resin, and terpene phenol resin can be preferably used from the viewpoint of being excellent in the adhesiveness with wheels. These tackifiers may be used alone or in combination of two or more thereof.

The content of the aforementioned tackifier in the pressure-sensitive adhesive layer is preferably within a range of 1 to 100 parts by weight, and more preferably within a range of 5 to 50 parts by weight, based on 100 parts by weight of the resin solids in the acrylic pressure-sensitive adhesive contained in the pressure-sensitive adhesive layer. If the content is less than 1 part by weight, there is the fear that the adhesive force of the pressure-sensitive adhesive layer may be insufficient. If the content is more than 100 parts by weight, the film cannot be peeled off completely from an automotive wheel, when being peeled off from the wheel, thereby causing the fear that the adhesive may remain on the wheel.

The aforementioned pressure-sensitive adhesive composition may further contain other publicly-known additives. For example, powders, such as colorant or pigment, dye, surfactant, plasticizer, surface lubricant, leveling agent, surfactant, softener, antistatic agent, inorganic or organic filler, metallic powder, or particle-shaped or foil-shaped substance, can be appropriately added in accordance with an application in which the protective film is used. The blending amount of these optional components can be the amount typically used in the field of pressure-sensitive adhesive tapes.

As a method of manufacturing the wheel protective film according to the present embodiment, a method of forming a pressure-sensitive adhesive layer on a base layer can be used. The protective film can be manufactured by, for example: a method in which the pressure-sensitive adhesive composition is coated on a separator subjected to a release treatment, and the pressure-sensitive adhesive layer is formed on the base layer by drying and removing a polymerization solvent; a method in which the pressure-sensitive adhesive layer is coated on the base layer, and the pressure-sensitive adhesive layer is formed on the base layer by drying and removing a polymerization solvent; or the like. Subsequently, an aging treatment may be performed in order to adjust the move of a component in the pressure-sensitive adhesive layer or adjust a cross-linking reaction. When the wheel protective film is manufactured by coating the pressure-sensitive adhesive composition on the base layer, one or more types of solvents, other than the polymerization solvent, may be newly added to the pressure-sensitive adhesive composition.

Examples of the solvent used in the present embodiment include, for example: methyl ethyl ketone, acetone, ethyl acetate, tetrahydrofuran, dioxane, cyclohexanone, n-hexane, toluene, xylene, mesitylene, methanol, ethanol, n-propanol, isopropanol, water, and various aqueous solutions, etc. These solvents may be used alone or in combination of two or more thereof.

Publicly-known methods to be used in the manufacture of surface protective films can be used as a method of forming the pressure-sensitive adhesive layer according to the present embodiment. Specific examples of the method include extrusion coating methods, by using, for example, a roll coat, kiss-roll coat, gravure coat, reverse coat, roll brush, spray coat, dip roll coat, bar coat, knife coat, air knife coat, and die coater, etc.

The thickness of the aforementioned pressure-sensitive adhesive layer is not particularly limited, but is appropriately selected. For example, the thickness is preferably within a range of 3 to 50 $\mu$m, and more preferably within a range of 5 to 40 $\mu$m. Thereby, the adhesiveness and adhesive force between the pressure-sensitive adhesive layer and an automotive wheel can be improved. If the thickness is less than 3 $\mu$m, there is the fear that sufficient adhesiveness and adhesive force may not be obtained. Also, if the thickness is more than 50 $\mu$m, improvement of the effects cannot be expected, thereby causing the fear that it may become disadvantageous economically.

The surface of the pressure-sensitive adhesive layer may be subjected to a surface treatment, such as a corona treatment, plasma treatment, ultraviolet treatment, or the like.

In the present embodiment, the gel fraction of the pressure-sensitive adhesive layer, which is measured based on the later-described measurement method, is preferably within a range of 60 to 95% by weight, more preferably within a range of 70 to 93% by weight, and in particular, preferably within a range of 75 to 90% by weight. If the gel fraction is less than 60% by weight, the cohesive force is decreased, thereby sometimes causing the pressure-sensitive adhesive layer to be inferior in impact resistance (durability). On the other hand, if the gel fraction is more than 95% by weight, the pressure-sensitive adhesive layer is sometimes inferior in adhesiveness.

The gel fraction of the pressure-sensitive adhesive layer can be adjusted by the addition amount of a cross-linking agent, the cross-linking treatment conditions (heating treatment temperature, heating time, etc.), or the like. The cross-linking treatment may be performed at the temperature in the step where the pressure-sensitive adhesive layer is dried, or performed in a cross-linking treatment step separately provided after the step where the pressure-sensitive adhesive layer is dried.

In the present embodiment, the weight average molecular weight (Mw) of the sol portion in the pressure-sensitive adhesive layer, which is measured based on the later-described measurement method, is preferably within a range of 5000 to 300000, and more preferably within a range of 10000 to 200000. When the Mw is within the aforementioned range, it is preferable because the adhesiveness and the cohesiveness of the pressure-sensitive adhesive layer are balanced with each other and because contamination of adherends (automotive wheels) by substances with a low molecular weight can be prevented.

The degree of swelling of the pressure-sensitive adhesive layer in the present embodiment, which is measured by the later-described measurement method, is preferably within a range of 5 to 40 times, and more preferably within a range of 10 to 30 times. If the degree of swelling is outside the aforementioned range, there is the tendency that the effect of improving the adhesiveness to an adherend (automotive wheel) may become poor.

The surface of the pressure-sensitive adhesive layer to be used in the wheel protective film according to the present embodiment is exposed, the pressure-sensitive adhesive layer may be protected by a sheet subjected to a release treatment (release sheet, separator, release liner) before the layer is put in practical use.

Examples of the material that forms the separator (release sheet, release liner) include appropriate thin-walled bodies, etc., such as, for example: plastic films including polyethylene, polypropylene, polyethylene terephthalate, and polyester films, etc.; porous materials including paper, cloth, nonwoven fabric, etc.; nets; foamed sheets; metallic foils; and laminated bodies thereof. Among them, paper can be preferably used from the viewpoint of being excellent in surface smoothness.

The film is not particularly limited, as far as the film can protect the aforementioned pressure-sensitive adhesive layer. Examples of the film include, for example, a polyethylene film, polypropylene film, polybutene film, polybutadiene film, polymethylpentene film, polyvinyl chloride film, vinyl-chloride copolymer film, polyethylene terephthalate film, polybutylene terephthalate film, polyurethane film, ethylene-vinylacetate copolymer film, etc.

The thickness of the separator is usually within a range of 5 to 200 $\mu$m, and preferably within a range of approximately 5 to 100 $\mu$m.

The separator may also be subjected, if necessary, to: a mold release and anti-stain treatment by a mold-release agent, such as a silicone amide, fluorine amide, long-chain alkyl amide, or fatty-acid amide, or by silica powders, etc.;

or an antistatic treatment, such as a coating type, kneading type, or vapor-deposited type treatment. In particular, by appropriately performing, on the surface of the aforementioned separator, a release treatment, such as a silicone treatment, long-chain alkyl treatment, fluorine treatment, or the like, the release property from the pressure-sensitive adhesive layer can be enhanced.

In the aforementioned manufacturing method, the sheet subjected to a release treatment (release sheet, separator, release liner) can be used, as it is, as the separator for the wheel protective film, thereby allowing the steps to be simplified.

The wheel protective film according to the present embodiment is made with a pressure-sensitive adhesive layer having the aforementioned structure being formed on one surface of the base layer.

In the present invention, the film means a planar material and includes a material usually referred to as a tape or sheet.

(Base Layer)

It is preferable that the base layer according to the present embodiment is formed of a polyethylene resin layer made of a polyethylene resin from the viewpoints of weatherability (water resistance, moisture resistance, heat resistance, etc.), impact resistance (tear strength, etc.), and transparency. Examples of the polyethylene resin layer include, for example: ethylene polymers (low-density, high-density, linear low-density polyethylene resin, etc.); olefin polymers, such as ethylene-$\alpha$ olefin copolymer; and resin layers made of both ethylene in an ethylene-vinyl acetate copolymer, ethylene-methyl methacrylate copolymer, ethylene-propylene copolymer, or ethylene-propylene-$\alpha$ olefin copolymer, etc., and another monomer; and it is particularly preferable that the base layer is formed of a low-density polyethylene. By using these polyethylene layers, the base layer becomes preferable from the viewpoints of weatherability, impact resistance, and transparency.

It is a more preferred aspect that the aforementioned base material is particularly formed of a low-density polyethylene resin and is a single layer. A base layer formed by combining multiple different types of polyolefin resins, such as polyethylene and polypropylene, is likely to be brittle, and there is the fear that the base layer may tear when the film (surface protective film) is peeled off. In addition, a tear of the base layer occurs when the film is peeled off at high speed, which is not preferable.

The base layer may be formed of an oriented resin film or a non-oriented resin film. In addition, the aforementioned polyethylene resin layers may be used alone or in combination in which two or more thereof are bonded together.

The thickness of the base layer is not particularly limited, but is preferable, for example, within a range of 10 to 200 $\mu$m, and more preferably within a range of 30 to 150 $\mu$m. There is the tendency that, if the thickness is less than 10 $\mu$m, the bonding workability becomes poor, and if the thickness is more than 200 $\mu$m, the following property to a curved surface becomes poor.

In order to improve the adhesiveness with another resin layer, the pressure-sensitive adhesive layer, and a primer coat, etc., the surface of the base material may be subjected to a surface treatment, such as a corona treatment, plasma treatment, ultraviolet treatment, or the like. The base layer (resin layer) may also be subjected to a back treatment.

Also, the base material can be appropriately subjected to a treatment using a weathering stabilizer treatment within a range not impairing the transparency, etc., of the present invention.

The treatment using the aforementioned weathering stabilizer (an ultraviolet ray absorbent, light stabilizer, antioxidant) can be performed with the stabilizer being coated or transferred onto the surface of the resin layer, or with the stabilizer being kneaded into the resin layer, etc.

Arbitrary additives, such as a flame retarder, inactive inorganic particles, organic particles, lubricant, antistatic agent, and pigment, can also be blended with the aforementioned base layer, within a range not impairing the advantages of the present embodiment.

Further, it is preferable in the present embodiment that, in order to be used in a surface protective film for automotive wheels, the base layer is formed of a resin film that is heat resistant and solvent resistant and that has flexibility. With the base layer having flexibility, the pressure-sensitive adhesive composition can be coated by a roll coater and the protective film can be wound into a roll shape.

The aforementioned base layer may also be subjected, if necessary, to: a mold release and anti-stain treatment by a mold-release agent, such as a silicone amide, fluorine amide, long-chain alkyl amide, or fatty-acid amide, or by silica powders, etc. ; an acid treatment; an alkali treatment; a primer treatment; or an antistatic treatment, such as a coating type, kneading type, or vapor-deposited type treatment.

Also, the base layer may be appropriately provided with a surface coated layer, such as, for example, a hard coated layer or a soft coated layer, if necessary. Examples of such a surface coated layer include silicone, melamine, urethane, silane, or acrylate thermosetting or chemically reacting surface coated layers. Thereby, a surface protective film for automotive wheels can be obtained, which is more excellent in abrasion-resistance, chemical resistance, weatherability, and anti-fogging property.

Because the wheel protective film according to the present embodiment has a function excellent in weatherability, adhesion reliability, transparency, and impact resistance by using the aforementioned pressure-sensitive adhesive layer and base layer, the film is suitable for a wheel protective film that is stored and distributed outdoors, etc., for a long period of time.

In the present embodiment, the wheel protective film means one for protecting, indoors or outdoors, the surface of a wheel for an automobile, etc. Examples of the films include, for example: films for protecting the surfaces of wheels used in various vehicles, such as compact automobiles, passenger cars, large automobiles, special vehicles, heavy machines, and motorcycles; and films to be used for exerting an effect of preventing rust in disc brakes arranged inside wheels.

Materials of automotive wheels to which the aforementioned wheel protective films are to be attached are not particularly limited, as far as the materials are used as materials of wheels. Among them, aluminum is preferably used from the viewpoint that the adhesive force of the protective film is relatively large after a long period of storage while the protective film is being attached thereto and adhesive deposit can be sufficiently prevented.

[Examples]

Hereinafter, examples, etc., specifically indicating the structures and advantages of the present embodiments will be described, but the present invention is not limited thereto. Evaluation items in Examples were measured as follows.

[Example 1]

(Preparation of (Meth)acrylic Polymer)

After 30 parts by weight of 2-ethylhexyl acrylate, 70 parts by weight of ethyl acrylate, 5 parts by weight of methyl methacrylate, 4 parts by weight of 2-hydroxyethyl acrylate, 0.2 parts by weight of 2,2'-azobisisobutyronitrile, as a polymerization initiator, and 200 parts by weight of ethyl acetate were placed in a 4-neck flask provided with an impeller, thermometer, nitrogen gas inlet pipe, and cooler, nitrogen gas was introduced while they were being stirred gently. The liquid temperature in the flask was maintained at approximately 65°C and a polymerization reaction was performed for 6 hours to prepare a (meth)acrylic polymer solution (35% by weight). The glass transition temperature of the (meth) acrylic polymer was -29°C.

(Preparation of Pressure-Sensitive Adhesive Solution)

The aforementioned (meth)acrylic polymer solution (35% by weight) was diluted to 20% by weight with ethyl acetate. Based on 100 parts by weight of (meth) acrylic polymer solids in this solution, 0.6 parts by weight of an isocyanate compound (CORONATE L made by NIPPON POLYURETHANE INDUSTRY CO., LTD.), 0.05 parts by weight of dibutyltin dilaurate (1% by weight ethyl acetate solution), as a cross-linking catalyst, and 1 part by weight of a light stabilizer (Sanol LS-770 made by SANKYO LIFETECH CO., LTD.), as a weathering stabilizer, were added, and then mixed and stirred together for approximately 1 minute under room temperature (25°C) to prepare a (meth) acrylic pressure-sensitive adhesive solution (A).

(Production of Wheel Protective Film)

A low-density polyethylene resin (PETROSEN 180, density: 0.922 g/cm$^3$, made by TOSOH CORPORATION) was extruded, by an inflation method, from a dice heated to 160°C to form a polyethylene film having a thickness of 75 $\mu$m, and a corona treatment was performed on one of the surfaces of the polyethylene film. The aforementioned (meth) acrylic pressure-sensitive adhesive solution (A) was coated on the surface subjected to the corona treatment, and a pressure-sensitive adhesive layer having a thickness of 10 $\mu$m was formed by heating the solution (A) at 90°C for 1 minute, thereby producing a wheel protective film. Thereafter, the film was cut into a circle having a diameter of 405 mm.

Results of measuring "gel fraction", "molecular weight of sol portion" "degree of swelling" "pressure-sensitive adhesive force (ordinary state, heat resistance, moisture resistance)", "weatherability" "self-back surface pressure-sensitive adhesive force", and "trouser tear strength" of the obtained wheel protective film, which were measured based on the later-described methods, are shown in Tables 1 and 2.

[Table 1]

| GEL FRACTION OF PRESSURE-SENSITIVE ADHESIVE LAYER(%) | 79.8 |
| --- | --- |

(continued)

| WEIGHT AVERAGE MOLECULAR WEIGHT (Mw) 0F SOL PORTION | | $1.4 \times 10^5$ |
|---|---|---|
| DEGREE OF SWELLING (TIMES) | | 20.9 |
| ADHESIVE PROPERTY AT TENSION SPEED OF 0.3 m/min (N/25 mm) | ORDINARY STATE PRESSURE-SENSITIVE ADHESIVE FORCE | 6.3 |
| | HEAT-RESISTANT PRESSURE-SENSITIVE ADHESIVE FORCE | 10.1 |
| | MOISTURE-RESISTANT PRESSURE-SENSITIVE ADHESIVE FORCE | 5.9 |
| | NtEATHERABILITY (ADHESIVE DEPOSIT) | ○ |
| ADHESIVE PROPERTY AT TENSION SPEED OF 30 m/min (N/25 mm) | ORDINARY STATE PRESSURE-SENSITIVE ADHESIVE FORCE | 12.3 |
| | HEAT-RESISTANT PRESSURE-SENSITIVE ADHESIVE FORCE | 26.5 |
| | MOISTURE-RESISTANT PRESSURE-SENSITIVE ADHESIVE FORCE | 16.5 |
| | WEATHERABILITY (ADHESIVE DEPOSIT) | ○ |
| TEAR STRENGTH (MAXIMUM STRESS) (UNIT: N) ORDINARY STATE (23°C × 50% RH) TENSION SPEED 0.3 m/min | | 11.5 |

[Table 2]

| | | TENSION SPEED (m/min) | | |
|---|---|---|---|---|
| | | 0. 3 | 10 | 30 |
| SELF-BACK SURFACE PRESSURE-SENSITIVE ADHESIVE FORCE (N/20 mm) | ROOM TEMPERATURE (23°C) | 1. 1 | 0. 9 | 0. 5 |
| | 40°C×92%RH | 0. 9 | 0. 9 | 0. 5 |
| | 50°C | 1. 3 | 0. 8 | 0. 4 |

[Example 2]

A wheel protective film was produced in the same way as in Example 1, except that the aforementioned wheel protective film was cut into a circle having a diameter of 430 mm.

[Example 33]

A wheel protective film was produced in the same way as in Example 1, except that the aforementioned wheel protective film was cut into a circle having a diameter of 420 mm.

[Comparative Example 1]

A wheel protective film was produced in the same way as in Example 1, except that the aforementioned wheel protective film was cut into a circle having a diameter of 455 mm.

[Comparative Example 2]

A wheel protective film was produced in the same way as in Example 1, except that the aforementioned wheel protective film was cut into a circle having a diameter of 470 mm.

[Evaluation]

(Gel Fraction)

The gel fraction was measured in the following way. After a predetermined amount (approximately 500 mg) of the pressure-sensitive adhesive layer was collected by being scraped from the obtained wheel protective film, the collected layer was enveloped with a porous tetrafluoroethylene sheet having an average pore diameter of 0. 2 μm (product name: "NTF1122" made by NITTO DENKO CORPORATION) and tied with a kite string to measure the weight at the time, the weight being assumed as a weight before dipping. The weight before dipping was the total weight of the pressure-sensitive adhesive layer, the tetrafluoroethylene sheet, and the kite string. The weight of each of the porous tetrafluoroethylene sheet and the kite string, which were to be used herein, was measured in advance, the total weight of the two being assumed as a package weight. Subsequently, a sample, in which the aforementioned pressure-sensitive adhesive layer was enveloped by the porous tetrafluoroethylene sheet and tied with the kite string, was placed into a 50 ml-container whose weight had been measured in advance, and the container was filled with ethyl acetate and left at rest at room temperature (23°C) for 7 days. Thereafter, the sample was taken out of the container and the ethyl acetate was removed by being dried in a dryer at 130°C for 2 hours. Thereafter, the weight of the sample was measured, the weight being assumed as a weight after dipping. The gel fraction was calculated from the following equation:

$$\texttt{Gel Fraction (\% by weight) = (A-B)/(C-B) × 100,}$$

wherein A is the weight before dipping, B is the package weight, and C is the weight after dipping.

(Molecular Weight of Sol Portion)

The weight average molecular weight of a sol portion was measured in the following way. The ethyl acetate was completely dried after the measurement of the aforementioned gel fraction, and a THF solution was prepared such that the concentration of the gel portion was 5.0 g/L and left at rest overnight. This solution was filtered by a membrane filter made of Teflon® having a thickness of 0.45 μm. The weight average molecular weight of the obtained filtrate was calculated, by polystyrene conversion with the use of a GPC method, as the weight average molecular weight of the sol portion. An analyzing apparatus used herein was HLC8120GPC made by TOSH.

(Degree of Swelling)

A degree of swelling means a value (times) calculated as W2/W1 in which: W1 is a total weight before dipping (the pressure-sensitive adhesive layer, tetrafluoroethylene sheet, and kite string) of the sample for the measurement of the gel fraction; and W2 is a wet weight of the sample when the sample was taken out of ethyl acetate (the ethyl acetate adhered to the surfaces of insoluble substances was wiped out), after the sample had been dipped therein at room temperature (e.g., 23°C) for 7 days.

$$\texttt{(Degree of swelling) = (W2/W1)}$$

Pressure-sensitive adhesive force was measured under the conditions described below.

(Production of Test Specimen)

After an aluminum plate having a thickness of 2 mm was prepared, and an acrylic melamine coating for aluminum wheel (SUPERLAC 5000AW-10 Clear made by NIPPON PAINT Co., Ltd.) was uniformly coated on the surface of the aluminum plate by using a spray gun. The coated plate that had been dried at 150°C for 1 hour was used as an adherend (hereinafter, also referred to as an acrylic clear coated panel). Subsequently, the surface of the aforementioned adherend was cleaned by using an alcohol (ethyl alcohol, isopropyl alcohol, or the like), and the protective film cut into a size of 25 mm in width × 100 mm in length was attached to the adherend by using an attaching machine under the conditions in which linear pressure was 78.5 N/cm and speed was 0.3 m/min, thereby producing a test specimen. The test specimens and protective films to be used in the evaluation were left at rest under the environment of 23 ± 2°C and 50 ± 5% RH for 2 hours or longer. Measurements were performed under the conditions described below.

(Ordinary State Pressure-Sensitive Adhesive Force)

Ordinary state pressure-sensitive adhesive force was measured in the following way: the aforementioned test specimen was left uncontrolled, for 48 hours, in a constant temperature and moisture test chamber whose temperature and moisture were adjusted to 23 ± 2°C and 50 ± 5% RH; and the test specimen was then stretched with the acrylic clear-coated panel being sandwiched by the lower chuck of a tensile tester (Autograph made by Shimadzu Corporation) and with one end of the protective film, which had been cut into a size of 25 mm in width and 100 mm in length to be attached, being sandwiched by the upper chuck thereof, under the conditions in which tension speed was 0.3 m/min and a peeling angle was 180° direction. Also, ordinary state pressure-sensitive adhesive force was measured by stretching the test specimen with the acrylic clear-coated panel being loaded onto the main body of a high-speed peeling tester (made by TESTER SANGYO CO., LTD.) and with one end of the protective film, which had been cut into a size of 25 mm in width and 100 mm in length to be attached, being sandwiched by the chuck thereof, under the conditions in which tension speed was 30 m/min and a peeling angle was 180° direction.

(Heat-Resistant Pressure-Sensitive Adhesive Force)

Heat-resistant pressure-sensitive adhesive force of the aforementioned test specimen, which had been left uncontrolled, for 500 hours, in a circulating hot air dryer whose temperature had been adjusted to 80 ± 2°C, was measured by stretching the test specimen under the conditions in which tension speed was 0. 3 m/min and 30 m/min and a peeling angle was 180° direction.

(Moisture-Resistant Pressure-Sensitive Adhesive Force)

Moisture-resistant pressure-sensitive adhesive force of the aforementioned test specimen, which had been left uncontrolled, for 500 hours, in a constant temperature and moisture test chamber whose temperature and moisture had been adjusted to 50 ± 2°C and 95 ± 3% RH, was measured by stretching the test specimen under the conditions in which tension speed was 0.3 m/min and 30 m/min and a peeling angle was 180° direction.

(Weathering Evaluation)

The test specimen was left uncontrolled, for 300 hours, in a xenon weather meter whose black panel temperature was adjusted to 63 ± 3°C and 120 minutes (of which, 18 minutes are rainfall conditions), and then presence/absence of adhesive deposit was visually confirmed.

(Self-Back Surface Pressure-Sensitive Adhesive Force)

Two protective films each cut into a size of 20 mm in width × 100 mm in length were prepared. Subsequently, a first protective film was attached to a stainless plate (supporting plate) and a second protective film was attached to the back surface of the first protective film by one reciprocation of a 2-kg roller, thereby producing a test specimen. After the test specimen was stored under the condition of 50°C for 24 hours, resistance force (self-back surface pressure-sensitive adhesive force) was measured, by using a tensile tester, with the second protective film being spread at tension speed of each of 0.3 m/min, 10 m/min, and 30 m/min, and at a peeling angle of 180°. The self-back surface pressure-sensitive adhesive force, occurring when the similar test specimen was stored at room temperature (23°C) and 50% RH for 24 hours or stored at 40°C and 92% RH for 24 hours, was also measured. It is preferable that the self-back surface pressure-sensitive adhesive force, occurring when the pressure-sensitive adhesive layer in the protective film is attached to the back surface of the base layer in the protective film and then the obtained object is stored at 50°C for 24 hours, is within a range of 0.1 to 2 N/20 mm in each of the tension speed of 0.3 m/min, 10 m/min, and 30 m/min. It is more preferable that the above self-back surface pressure-sensitive adhesive force is within a range of 0.2 to 1.6 N/20 mm.

(Trouser Tear Strength)

The protective film was cut into a size of 150 mm long × 75 mm wide, and a notch having a length of 75 mm was further provided from the center of the transverse side in the perpendicular direction (longitudinal direction), thereby producing a test specimen. The test specimen was torn at a tension speed of 0.3 m/min with a portion of the test specimen, located on the left side from the notch, being sandwiched by the lower chuck in a tensile tester (Autograph made by Shimadzu Corporation) and with a portion thereof, located on the left side from the notch, being sandwiched by the upper chuck. At the time, the maximum load (maximum stress) was read and assumed as trouser tear strength (N). Herein, the protective film to be used in the evaluation was left at rest at 23 ± 2°C and 50 ± 5% RH for 48 hours.

(Peeling Test in Actual Driving)

The protective film was outdoors and manually attached to a wheel of a car and left uncontrolled for 3 hours. Thereafter, it was visually confirmed whether peeling of the protective film was absent after the car had driven 10 km at 60 km/h. In each of Examples and Comparative Examples, the dimensions of both the diameter (L1) of the wheel to which the protective film was attached and the outer diameter (L2) of the opening in the wheel are shown in Table 3. The wheel used herein is an aluminum wheel.

(Peeling Test Under Increased Temperature and Moisture)

The protective film was manually attached to a wheel of a car under an environment of 23°C and left uncontrolled for 3 hours. Thereafter, the wheel tire to which the protective film had been attached was made to stand in a constant temperature and moisture test chamber whose temperature and moisture were set to 40 ± 2°C and 92 ± 3% RH. After the wheel tire was stored therein for 300 hours, it was visually confirmed whether peeling of the protective film was absent. In each of Examples and Comparative Examples, the dimensions of both the diameter (L1) of the wheel to which the protective film was attached and the outer diameter (L2) of the opening in the wheel are shown in Table 3. The wheel used herein is an aluminum wheel.
[Table 3]

| | | EXAMPLE 1 | EXAMPLE 2 | EXAMPLE | COMPARATIVE EXAMPLE 1 | COMPARATIVE EXAMPLE 2 |
|---|---|---|---|---|---|---|
| DIAMETER OF WHEEL | L 1 (mm) | 415 | 440 | 440 | 415 | 440 |
| DIAMETER OF OPENING IN WHEEL | L 2 (mm) | 375 | 395 | 395 | 375 | 395 |
| DIAMETER OF PROTECTIVE FILM | L 3 (mm) | 405 | 430 | 420 | 455 | 470 |
| RELATION OF L1 >L3 SATISFIED OR NOT? | | SATISFIED | SATISFIED | SATISFIED | NOT SATISFIED | NOT SATISFIED |
| L2+ (L1-L2) ×0. 5 (mm) | | 395 | 418 | 418 | 395 | 418 |
| RELATION 0F L3 ≥ L2 + (L1-L2) × 0.5 SATISFIED OR NOT? | | SATISFIED | SATISFIED | SATISFIED | SATISFIED | SATISFIED |
| PEELING TEST IN ACTUAL DRIVING | | ○ | ○ | ○ | × | × |
| PEELING TEST UNDER INCREASED TEMPERATURE AND MOISTURE | | ○ | ○ | ○ | × | × |

As shown in Table 3, it was confirmed that the protective film described in each of Examples 1 to 3 exerts an excellent effect in the peeling test.
On the other hand, in the protective film described in each of Comparative Examples, peeling was generated with an area where pop-off of the protective film was generated being a starting point, during the driving or under the increased temperature and moisture, because the diameter of the protective film was larger than that of the wheel, and hence the pressure-sensitive adhesive force of a portion in contact with the tire was weak, thereby not allowing the protective film to be sufficiently attached to the tire. As a cause for the peeling of the protective film occurring during the driving, it is assumed that, because the pressure-sensitive adhesive force of the protective film to a tire is originally weak, an end portion of the film pops off, thereby causing the peeling thereof due to an influence by wind, etc. As a cause for the peeling thereof under the increased temperature and moisture, the possibility can be considered that a component separating from the tire, such as a plasticizer, may move to the pressure-sensitive adhesive surface of the protective film, thereby causing a decrease in the adhesive function of the protective film.

[Second Embodiment]

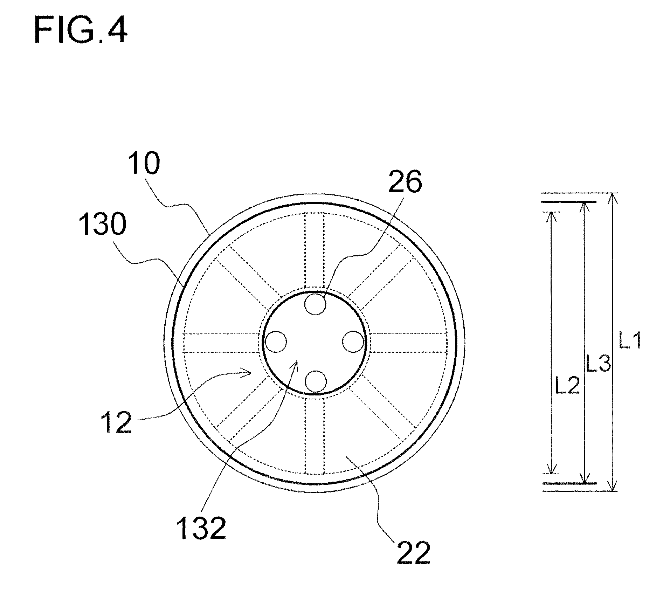

Fig. 4 is a front view illustrating a state where a protective film according to Second Embodiment is attached to a wheel. In a protective film 130 according to the present embodiment, a circular opening 132 is formed at the center of the film, as illustrated in Fig. 4. The opening 132 is formed such that a plurality of insertion holes 26 formed in the wheel 10 are exposed. Thereby, it becomes possible that the protective film 130 is attached to the wheel 10 and then the wheel 130 is attached to the main body of a vehicle. In other words, the protective film 130 can be attached to the wheel 10, irrespective of the fact that the wheel 10 is attached to the main body of a vehicle or not.

[Third Embodiment]

In the aforementioned embodiments, the case where the pressure-sensitive adhesive layer is a solvent type; however, a pressure-sensitive adhesive layer of an emulsion type can also be used. Hereinafter, a method of manufacturing a pressure-sensitive adhesive layer of an emulsion type will be described.

(Preparation of Water Dispersion Type Acrylic Polymer)

After 58 parts by weight of butyl acrylate, 40 parts by weight of butyl methacrylate, 2.0 parts by weight of acrylic acid, 0.03 parts by weight of 2,2'-azobis(2-amidinopropane)dihydrochloride, as a polymerization initiator, 2.4 parts by weight of polyoxyethylene alkylphenyl ether phosphoric acid, as a release auxiliary agent, 0.8 parts by weight of polyoxyethylene nonylphenyl ether ammonium sulfate, as an emulsifier, and 150 parts by weight of water were placed into a reactor provided with a cooling pipe, nitrogen inlet pipe, thermometer, and stirrer, they were subjected to an emulsion polymerization. The mixture was adjusted to pH 8 by 10% by weight aqueous ammonia to obtain a polymer emulsion.

(Preparation of Pressure-Sensitive Adhesive Solution)

A water dispersion type pressure-sensitive adhesive A was obtained by mixing, into the aforementioned polymer emulsion, both 2.0 parts by weight of "EPOCROS WS-500" made by Nippon ShokubaiCo., Ltd. (oxazoline group equivalent: 220g*solid/eq.), as a water-soluble cross-linking agent containing an oxazoline group, and 2.0 parts by weight of "TINUVIN 765" made by Ciba Japan K.K., as a light stabilizer, based on 100 parts by weight of the solids (water dispersion type copolymer) in the polymer emulsion.

(Production of Wheel Protective Film)

A low-density polyethylene resin (PETROSEN 180, density: 0.922 g/cm$^3$, made by TOSOH CORPORATION) was extruded, by an inflation method, from a dice heated to 160°C to form a polyethylene film having a thickness of 75 $\mu$m, and a corona treatment was performed on one of the surfaces of the polyethylene film. The aforementioned water dispersion type pressure-sensitive adhesive A was coated on the surface subjected to the corona treatment, and a pressure-sensitive adhesive layer having a thickness of 10 $\mu$m was formed by heating the adhesive A at 80°C for 1 minute, thereby producing a wheel protective film.

Even a protective film having such an emulsion type pressure-sensitive adhesive layer can exert effects similar to those of the protective film according to each of the aforementioned embodiments.

The present invention has been described above based on the embodiments and examples. The embodiments are described for exemplary purposes only, and it can be readily understood by those skilled in the art that various modifications may be made by making various combinations of the aforementioned components or processes, which are also encompassed in the scope of the present invention.

Reference Numerals

|    |             |
|----|-------------|
| 10 | WHEEL       |
| 12 | DISC PORTION |
| 14 | RIM PORTION |

(continued)

| 16 | HUB PORTION |
| 18 | RIM FLANGE PORTION |
| 18A | RIM INNER CIRCUMFERENTIAL SURFACE |
| 20 | SPOKE PORTION |
| 22 | OPENING |
| 24 | HUB HOLE |
| 26 | INSERTION HOLE |
| 30 | PROTECTIVE FILM |
| 32 | BASE LAYER |
| 34 | PRESSURE-SENSITIVE ADHESIVE LAYER |
| 130 | PROTECTIVE FILM |
| 132 | OPENING |

Industrial Applicability

The present invention can be used in protective films to be attached to wheels of vehicles, such as automobiles.

**Claims**

1. A wheel protective film comprising:

   a base layer; and
   a pressure-sensitive adhesive layer provided on one of the surfaces of the base layer, wherein
   the diameter of the wheel protective film is smaller than that of a wheel to be protected and larger than the outermost diameter of an opening formed on the disc surface of the wheel to be protected.

2. The wheel protective film according to claim 1, wherein
   the diameter of the wheel protective film is 80% or more of the diameter of the wheel to be protected.

3. The wheel protective film according to claim 1 or claim 2, wherein
   when it is assumed that: the diameter of the wheel to be protected is L1; the outer diameter of the opening is L2; and the diameter of the wheel protective film is L3, the following equation is satisfied:

$$L3 \geq L2+(L1-L2) \times 0.5.$$

4. The wheel protective film according to any one of claims 1 to 3, wherein
   a circular opening is formed at the center of the wheel protective film, and wherein
   the opening is formed such that a plurality of bolt holes formed in the wheel are exposed.

# FIG.1

10

# FIG.2A

30

A      A

# FIG.2B

32
34

30

# FIG.3

# FIG.4

## INTERNATIONAL SEARCH REPORT

| International application No. |
| --- |
| PCT/JP2011/003434 |

**A. CLASSIFICATION OF SUBJECT MATTER**
*C09J7/02*(2006.01)i, *B60B7/00*(2006.01)i, *C09J133/04*(2006.01)i

According to International Patent Classification (IPC) or to both national classification and IPC

**B. FIELDS SEARCHED**

Minimum documentation searched (classification system followed by classification symbols)
C09J7/02, B60B7/00, C09J133/04

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 7-309510 A  (Honda Motor Co., Ltd.),<br>28 November 1995 (28.11.1995),<br>claims; fig. 4<br>(Family: none) | 1-3<br>4 |
| X<br>Y | JP 2009-107556 A  (Tsuchiya Co., Ltd.),<br>21 May 2009 (21.05.2009),<br>claims; examples 1 to 2<br>(Family: none) | 1-4<br>4 |
| P,X | JP 2010-149643 A  (Toyota Motor Corp.),<br>08 July 2010 (08.07.2010),<br>claims; paragraph [0021]; fig. 3<br>(Family: none) | 1-4 |

| ☐ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    23 August, 2011 (23.08.11) | Date of mailing of the international search report<br>    06 September, 2011 (06.09.11) |
| --- | --- |
| Name and mailing address of the ISA/<br>    Japanese Patent Office | Authorized officer |
| Facsimile No. | Telephone No. |

Form PCT/ISA/210 (second sheet) (July 2009)

## REFERENCES CITED IN THE DESCRIPTION

**Patent documents cited in the description**

- JP 2009227746 A

**Non-patent literature cited in the description**

- **J. BRANDUP et al.** Polymer Handbook. John Wiley & Sons, Inc, 1999